# EUROPÄISCHE PATENTANMELDUNG

(11) **EP 0 808 755 A1**
(43) Veröffentlichungstag der Anmeldung: **26.11.1997**
(21) Anmeldenummer: 97107332.5
(22) Anmeldetag: 03.05.1997
(51) Int. Cl.: B60S 9/205

(54) **Abstützeinrichtung mit Querbewegungsantrieb für mobile Arbeitsgeräte**

(30) Priorität: 24.05.1996 DE 19620944
(71) Anmelder: Karl Schaeff GmbH & Co. Maschinenfabrik, 74595 Langenburg (DE)
(72) Erfinder: Schaeff, Hans, 74595 Langenburg (DE)
(74) Vertreter: Raeck, Wilfrid, Dipl.-Ing.

(57) **Zusammenfassung**

Eine an ein mobiles Arbeitsgerät, insbesondere Teleskopstapler anbaubare Abstützeinrichtung besteht aus einem quermittig vorn am Fahrzeugrahmen (4) anschließbaren Querträger (20), der höhenverstellbare Bodenplatten (23) zum Anheben der Vorderachse (3) aufweist, und aus gelenkigen Verbindungseinrichtungen zwischen Querträger und Fahrzeugrahmen sowie zwischen Querträger und Bodenplatten, wobei eine Verbindungseinrichtung durch ein Paar seitlich nebeneinander angeordneter, jeweils auf Vertikalachsen gelagerter Parallellenker (24, 25) gebildet ist und diesem Lenkerpaar Schwenkbetätigungsmittel (26) zugeordnet sind, um den Fahrzeugrahmen bezüglich der aufstehenden Bodenplatten (23) seitwärts zu bewegen.

## Beschreibung

Die Erfindung bezieht sich auf eine Abstützeinrichtung mit Querbewegungsantrieb für ein auf Rädern fahrbare Arbeitsgerät mit einem zweiachsigen Fahrzeugrahmen. Derartige Geräte sind z.B. Teleskopstapler mit einem teleskopisch ausfahrbaren und aufwärts schwenkbaren Mast, an dem eine normalerweise angebrachte Staplergabel durch verschiedene andere Werkzeuge wie Leichtgutschaufeln, Kranhaken, Klammern usw. ausgewechselt werden können.

Solche Arbeitsgeräte werden z.B. als Stapler eingesetzt, um eine Last aufzunehmen und mit Hilfe des wendigen Reifenfahrwerks an einen anderen Ort zu transportieren. Andererseits arbeiten diese Fahrzeuge quasi stationär, wenn die beträchtliche Reichweite und -höhe ihres Teleskoparmes ausgenutzt werden soll, um beispielsweise ein Ladegut ca. 10 m hoch an eine Baustelle zu bringen und dort an genau bestimmter Stelle abzusetzen. In diesen Fällen muß das Fahrzeug abgestützt und auf unebenem Gelände quer zur Fahrzeug-längsachse horizontiert werden, damit der steil stellbare Teleskopmast einschließlich seiner Last etwa über der die Fahrzeuglängsachse enthaltenden senkrechten Ebene verbleibt und somit vom Fahrwerk und zusätzlichen Stützmitteln sicher abgestützt wird. Obwohl die Bediener schnell Übung darin entwickeln, mit solchen Fahrzeugen das Lade- oder Entladeziel genau anzufahren und die erforderliche Abstützung vorzunehmen, bleibt jedoch als schwierigere Vorgabe bestehen, die Last in der bei ausgefahrenem Teleskopmast gegebenen erheblichen Entfernung um ungefähr ± 0,5 m seitlich zu bewegen, wenn beispielsweise an Hochbauten die Last in eine seitlich begrenzte Öffnung eingefahren werden muß.

Um diese seitliche Verschiebung bzw. Querbewegung der Last zu bewerkstelligen, ist es bekannt, als Gabelträger einen hydraulisch betätigten Querschlitten vorzusehen, dessen Führungen am Teleskopmastende angebracht sind. Da Querschlitten, Führungen und Antriebsmittel sich unmittelbar hinter der Transportlast befinden, ist dadurch die Nutzlast verringert, was sich vor allem bei Teleskophüben von bis zu 10 m nachteilig bzw. einschränkend bemerkbar macht. - Andererseits ist ein auf Rädern fahrbarer Teleskopstapler bekannt, bei dem die an einem aufwendigen Lenkersystem angelenkte Vorderachse wahlweise einschließlich einer Abstützeinrichtung über als Lenker wirkende hydropneumatische Zylinder so zum Fahrzeug verschwenkt werden kann, daß dadurch die Fahrzeuglängsachse um etwa ± 5° seitwärts verschoben wird. Da mit Teleskopstaplern häufig Arbeiten zu bewältigen sind, für die das Ausfahren des Teleskopmastes auf seine größte Länge nicht erforderlich ist und folglich auch die Abstützeinrichtung mit Querverstellung nicht angewendet zu werden braucht, bleibt das bekannte Fahrzeug ständig durch die Kosten der fest installierten Abstützeinrichtung belastet.

Aufgabe der Erfindung ist, eine Abstützeinrichtung der eingangs bezeichneten Gattung zu schaffen bzw. dahingehend auszugestalten, daß sie als kostengünstig herstellbare bauliche Einheit schnell, ohne maschinelle Hilfsgeräte mit wenigen Handgriffen an einem Arbeitsgerät an- und abgebaut werden kann und in der Lage ist, das Fahrzeug bei angehobener Vorderachse seitwärts um ca. ± 5° zu verschwenken und damit eine den meisten Anforderungen genügende Querbewegung der Last zu erreichen.

Zur Lösung dieser Aufgabe weist eine Abstützeinrichtung gemäß der Erfindung die dem Anspruch 1 entnehmbaren Merkmale auf.

Ein wesentlicher Vorteil der vorgeschlagenen Abstützeinrichtung liegt darin, daß sie auf einfache Weise ohne Hilfsgeräte und mit wenig Handhabungen an einem Teleskopstapler oder einem ähnlichen fahrbaren Arbeitsgerät schnell und beliebig oft an- und abgebaut werden kann. Da das Fahrzeug bei abgebauter Abstützeinrichtung unbeschwert und wendig ist, kann es zur besseren Ausnutzung seiner Kapazität für zahlreiche andere Einsatzzwecke benutzt werden, bei denen der Teleskopmast nur auf solche Länge ausgefahren zu werden braucht, für die die Standfestigkeit des Fahrzeuges allein ausreicht. Aus demselben Grund kann die Abstützeinrichtung für Einsatzzwecke mit großer ausgefahrener Mastlänge bzw. -höhe bei Bedarf mit einer besonders großen Abstützbreite ausgeführt sein, um nach Beendigung der Arbeiten für Straßenfahrten abgebaut zu werden.

Ebenso sind durch das konstruktive Lösungskonzept die aus einfacher Anbaumöglichkeit und Seitenverschwenkbarkeit bestehenden Vorgaben vorteilhaft einfach dadurch kombiniert, daß die Schwenkmittel zum Seitwärtsschwenken stets direkt an dem am Fahrzeugrahmen gelenkig angeschlossenen Anbauglied - Verbindungslenker oder Querträger - angreifen, wodurch Kräfte direkt in den Fahrzeugrahmen eingeleitet werden.

Bei einer ersten speziellen Ausführungsform ist der an beiden Enden mit ausfahrbaren oder in seiner Ebene schwenkbaren Stützbeinen ausgestattete Querträger über einen Vertikalbolzen in seiner Längsmitte mit dem an seinem anderen Ende ain Fahrzeugrahmen lösbar angeschlossenen Verbindungslenker verbunden, zwischen dessen Enden ein Stellzylinder zur Seitenverschwenkung angreifen kann.

Gemäß einer anderen Ausführungsform können an den Enden des mittels eines steckbaren Schwenkbolzens direkt an den Fahrzeugrahmen anschließbaren Querträgers um senkrechte Achsen zueinander parallel seitenschwenkbare Pratzenarme angeschlossen sein, die zusätzlich längs nach vom abschwenkbar sind und deren vordere Enden an abwärts gerichteten Kugelgelenkzapfen allseitig einstellbare Bodenplatten tragen. In diesem Fall wird der Fahrzeugrahmen an seinem vorderen Ende über den dort unmittelbar angeschlossenen Querträger seitlich verschwenkt, indem die Konsolen-Schwenkzylinder den Querträger gegenüber den von den beiden Pratzenarmen gegen den Boden gedrückten Bodenplatten bzw. gegenüber einer gedachten Verbindungslinie zwischen diesen Bodenplatten parallel seitlich verschieben.

Zum selbsttätigen Rückstellen des mittels eines steckbaren Vertikalbolzens an den Fahrzeugrahmen angeschlossenen Querträgers in seine Grundstellung können an beiden Seiten des Fahrzeugrahmens befestigte federnde Anschläge oder Federzylinder vorgesehen sein.

In vorteilhafter Ausgestaltung der Erfindung ist unter seitlichem Abstand von dem Verbindungslenker zwischen Fahrzeugrahmen und Querträger ein längenveränderlicher Lenker angeordnet, der in der durch rechtwinkligen Verlauf des Querträgers zur Fahrzeuglängsachse bestimmten Grundstellung als Parallellenker wirkt und durch innere Federmittel in eine dem Verbindungslenker entsprechende Länge vorgespannt ist.

Zweckmäßigerweise wird die Rückstellfunktion des oder der hydraulischen Federzylinder zum Rückstellen des Querträgers in seine Grundstellung und auch der Konsolenzylinder zum Rückstellen der Pratzenarme in ihre zum Querträger normalerweise senkrechten Verlaufsebenen nach Erreichen der beabsichtigten seitlichen Fahrzeugverschwenkung mittels gesteuerter hydraulischer Schaltelemente unterbrochen/blockiert, bis die Bodenplatte in beschädigungsfreie Höhe über dem Boden angehoben sind.

Weitere Vorteile und Merkmale ergeben sich aus der nachfolgenden Beschreibung von Ausführungsbeispielen der Abstützeinrichtung gemäß der Erfindung anhand der Zeichnungen. Darin zeigen, jeweils schematisch,
- Fig. 1: einen Teleskopstapler mit aufgenommener Last in Seitenansicht mit durch die vom angebaute Abstützeirnichtung angehobener Vorderachse,
- Fig. 2: eine Draufsicht auf das Fahrgestell des Fahrzeugs nach Fig. 1 mit in Grundstellung angeordneter Abstützeinrichtung,
- Fig. 3: eine Draufsicht ähnlich wie Fig. 2 mit in Fahrerblickrichtung nach rechts um den Winkel α seitlich verschwenkten Fahrzeugrahmen,
- Fig. 4: einen geschnittenen, längenveränderlichen Lenker als mechanisch federndes Element,
- Fig. 5: den geschnittenen längenveränderlichen Lenker mit hydraulischer Federung,
- Fig. 6: eine Variante des Verstellzylinders mit hydraulischem Speicher als Rückführung in die Grundstellung,
- Fig. 7: eine Frontansicht der Abstützeinrichtung gemäß Fig. 1 bis 3 bei Abstützung auf hängigem Gelände,
- Fig. 8: eine breite Variante der Abstützeinrichtung gemäß Fig. 7 mit in der senkrechten Ebene des Querträgers abschwenkbaren Stützbeinen,
- Fig. 9: einen Teleskopstapler wie in Fig. 1, jedoch mit einer nach vorn abschwenkbare Pratzenarme aufweisenden Abstützvorrichtung gemäß der Erfindung,
- Fig. 10: eine Draufsicht auf das Arbeitsgerät nach Fig. 9 mit in Grundstellung befindlicher Abstützeinrichtung, und
- Fig. 11: das Arbeitsgerät wie in Fig. 10 mit in Fahrerblickrichtung nach rechts verschwenktem Fahrzeugrahmen.

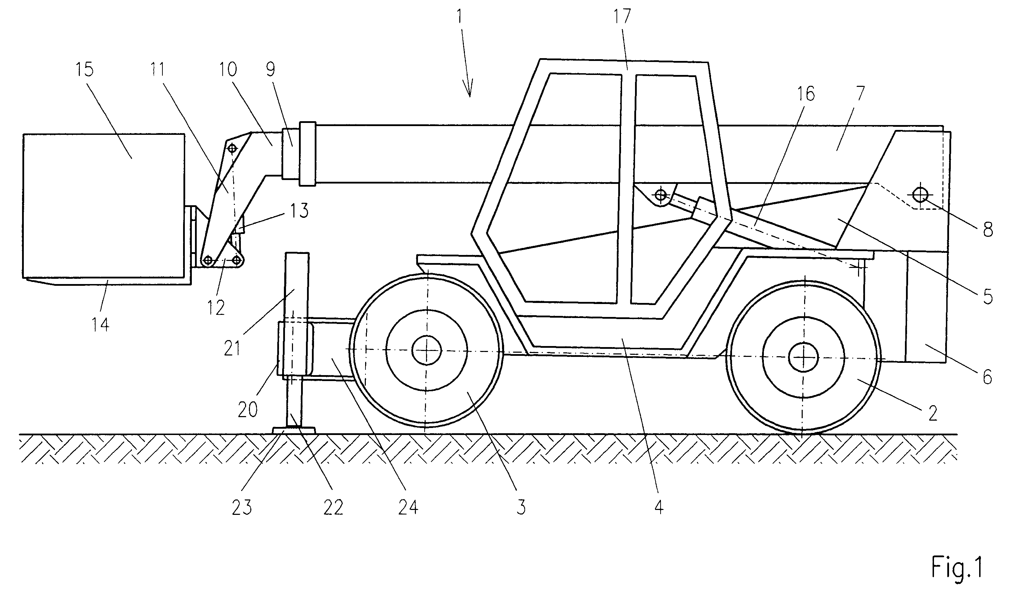

Entsprechend Fig. 1 bis 3 hat ein auf Rädern fahrbarer Teleskopstapler 1 eine pendelnd aufgehängte Hinterachse 2 als Lenkachse sowie eine starr angelenkte, wahlweise lenkbare Vorderachse 3, die einen Fahrzeugrahmen 4 mit einem Fahrzeugaufbau 5 tragen. Zum Fahrzeugaufbau gehören ein rückwärtiges Gegengewicht 6 und ein Teleskoparm 7, der am Fahrzeugaufbau 5 eine waagerechte Lagerachse 8 hat und aus einem ersten Ausschub 9 wahlweise einen zweiten Ausschub 10 sowie eine Ausschubnase 11 besteht. An der Ausschubnase 11 ist ein kippbarer Werkzeugträger 12 mittels eines Kippzylinders 13 betätigbar und ein auswechselbares Werkzeug, hier eine Staplergabel 14 vorgesehen, auf der eine aufgenommene Last 15 angedeutet ist. Der bis ca. 10 m ausfahrbare Teleskoparm 7 erstreckt sich neben einer Fahrerkabine 17 und kann durch ein oder zwei Armzylinder 16 vertikal bis in einen sehr steilen Verlauf bis max. ca. 70° verstellt werden.

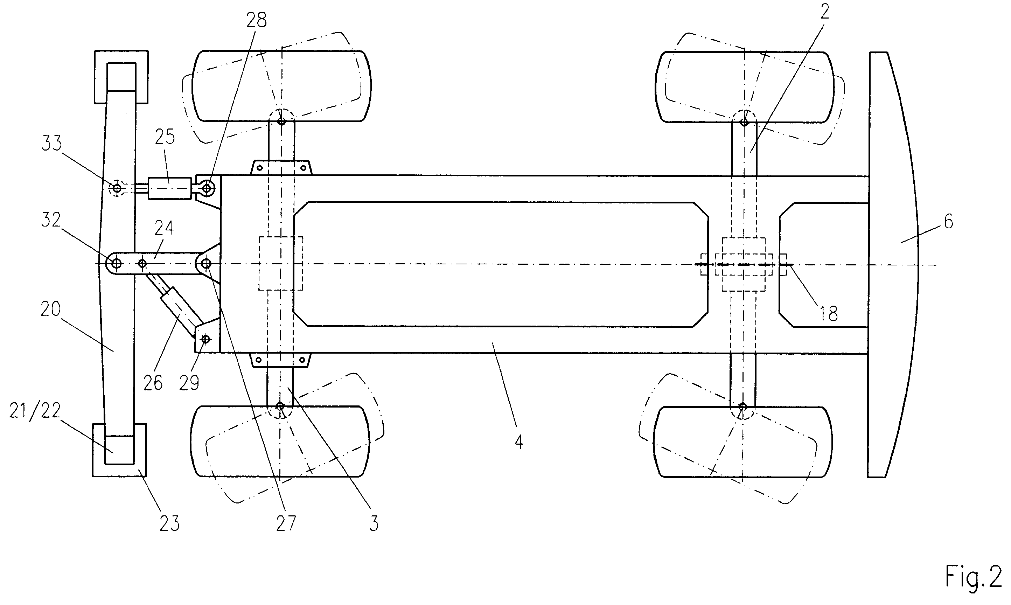

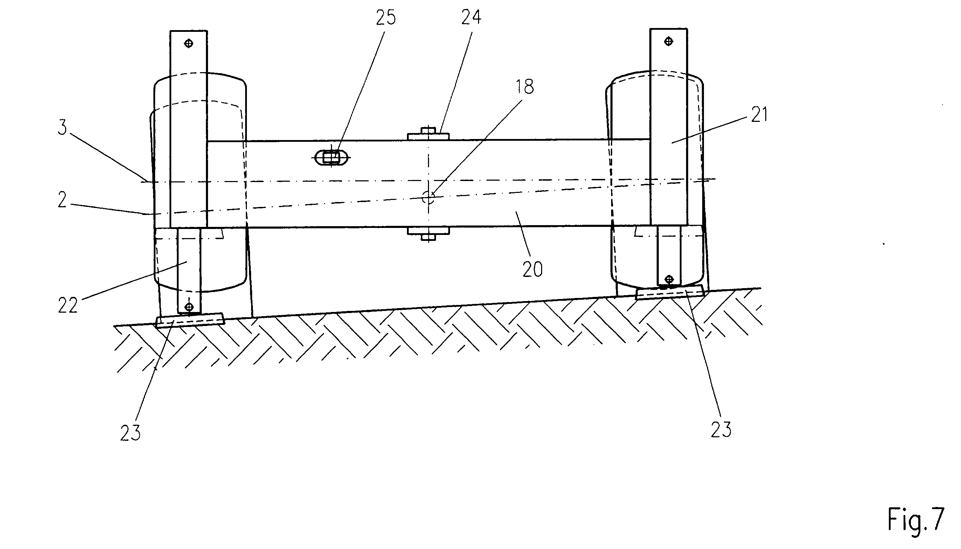

Eine an das vordere Ende des Fahrzeugrahmens 4 anbaubare Abstützeinrichtung umfaßt einen Querbalken 20, an dessen Enden jeweils ein Stützbeingehäuse 21 befestigt ist, in dem ein hydraulisch oder mechanisch ausfahrbares Stützbein 22 mit gelenkig gehaltener Bodenplatte 23 vertikal ein- und ausfahrbar ist. Gemäß Fig. 7 ist das Fahrzeug auf hängigem Gelände so abgestützt, daß der Fahrzeugrahmen 4 und damit sämtliche Aufbauten 5 bis 17 waagerecht sind. Indem sich die pendelnd aufgehängte Hinterachse 2 dem Gelände anpaßt, drehen sich Fahrzeugrahmen 4 und Vorderachse 3 um die Achspendellagerung 18 (vgl. auch Fig. 2) der Hinterachse 2.

Der Querträger 20 enthält einen in seiner Quermitte angeordneten senkrechten Lagerbolzen 32, auf dem das vordere Ende eines in sich steifen Verbindungslenkers 24 gelagert ist, über den der Querträger mittels eines in der Fahrzeuglängsinittelachse senkrechten Schwenkbolzens 27 mittig an den Fahrzeugrahmen angeschlossen ist.

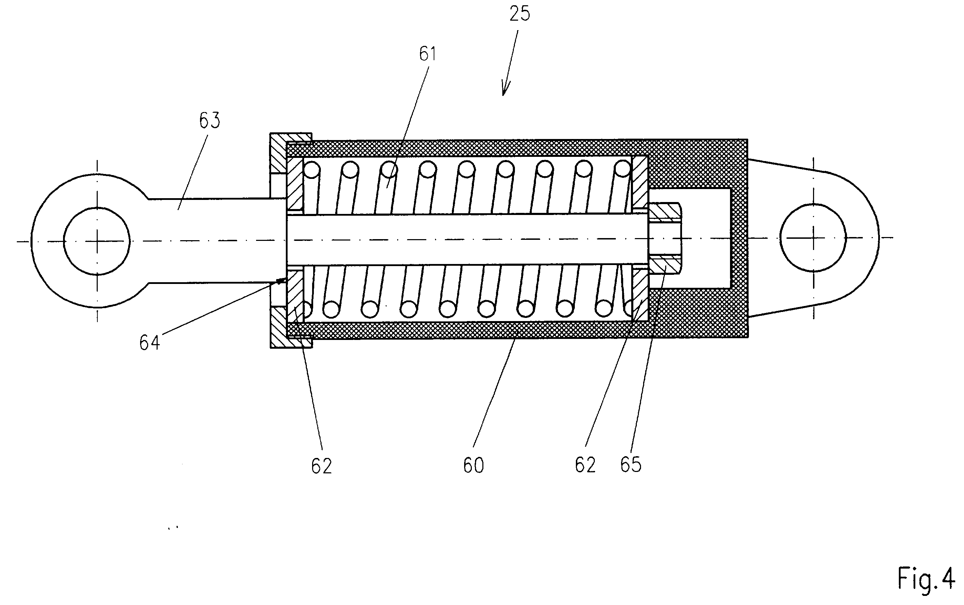

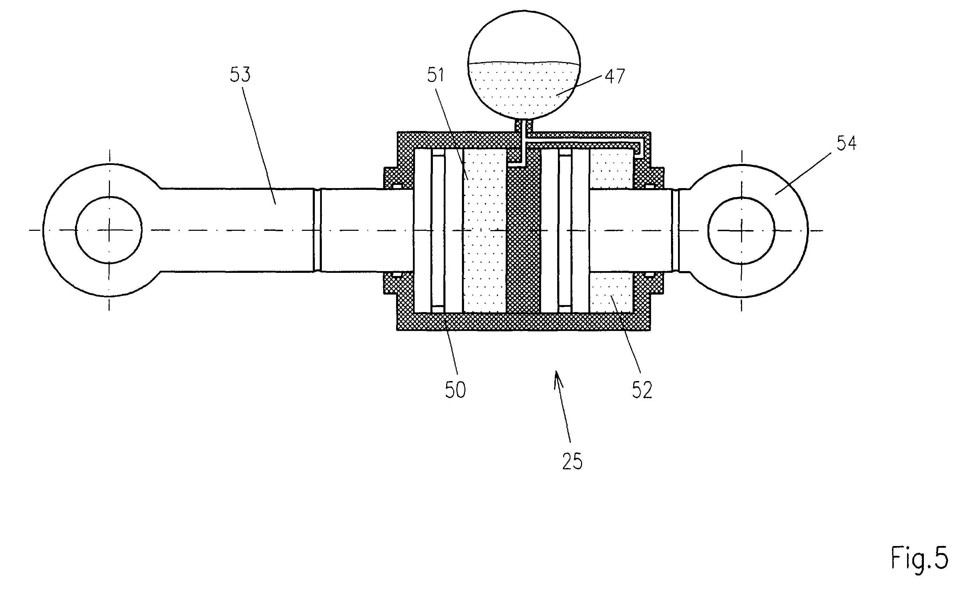

Unter seitlichem Abstand vom Verbindungslenker 24 erstreckt sich zwischen dem Querträger 20, gehalten vom senkrechten Bolzen 33 und einem seitlich vom am Fahrzeugrahmen 4 gehaltenen senkrechten Bolzen 28 ein Lenker 25, der in der durch rechtwinkligen Verlauf des Querträgers 20 zur Fahrzeuglängsmittelachse 30 bestimmten Grundstellung als Parallellenker zu 24 wirkt, jedoch als längenveränderlicher Federlenker in Fig. 4 oder 5 ausgeführt ist, der durch innere Federmittel auf ein dem Verbindungslenker 24 entsprechendes Längenmaß vorgespannt ist.

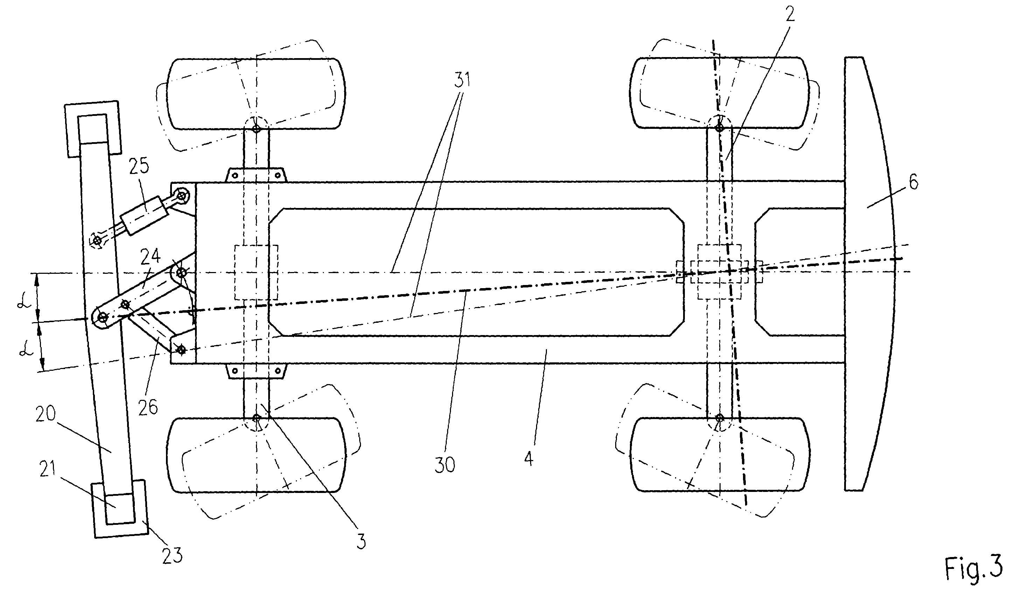

Um den Fahrzeugrahmen 4, nachdem er entsprechend Fig. 1 durch Ausfahren der Abstützbeine 22 mit seiner Vorderachse 3 vom Boden abgehoben worden ist, entsprechend Fig. 3 seitwärts zu verschwenken, ist (ein seitlich) am vorderen Ende des Fahrzeugrahmens um einen senkrechten Bolzen 29 angelenkter Stellzylinder 26 mit seinem anderen Ende zwischen den Enden des Verbindungslenkers 24 gelenkig angeschlossen. Nach Verschwenkung des Fahrzeugrahmens 4 um einen bis ca. 5° betragenden Winkel α befindet sich die Fahrzeuglängsmittelachse 31 seitlich der für die Ausgangsstellung geltenden Fahrzeuglängsmittelachse 30, die weiterhin durch den Querträger und die Hinterachse 2 verläuft, nachdem das Fahrzeug auf der nicht gebremsten Hinterachse 2 etwas um das rechte Hinterrad rollt.

Nach Beendigung des Abstützvorganges, d.h. nach Aufheben des Bodenkontaktes der Bodenplatten kommt dem Lenker 25 in Verbindung mit dem Stellzylinder 26 die Aufgabe zu, den Querträger 20 aus der in Fig. 3 gezeigten Lage wieder in die Grundstellung gemäß Fig. 2 zurückzuführen.

Dies geschieht in der Weise, daß der Lenker 25 auf eine Länge entsprechend dem Verbindungslenker 24 selbständig zurückfedert, entweder durch die in Fig. 4 gezeigte mechanische Feder 61 oder den in Fig. 5 gezeigten Hydraulikspeicher 47. Damit ist die Rechtwinkligkeit des Querträgers 20 zur Fahrzeuglängsachse wieder hergestellt. Der Stellzylinder 26 kann manuell auf Mittelstellung gesteuert werden.

Fig. 4 zeigt einen längenveränderlichen Lenker 25 als mechanisch federndes Element. In einem zylindrischen Gehäuse 60 ist eine vorgespannte Feder 61 zwischen zwei endseitigen Federplatten 62 eingespannt. Die sich durch die Feder erstreckende Stange 63 besitzt eine Schulter 64 als Anlage für die eine Federplatte, und die Schraubmutter 65 dient zum Vorspannen einer Feder und bildet eine Anlage für die zweite Federplatte 62. Wenn eine äußere Kraft den Lenker verkürzen will, bewegt sich die Stange 63 in das Gehäuse 60 und spannt die Feder 61 solange, bis die Mutter 65 in einer sie umgebenden Ausnehmung am Gehäuseboden ansteht. Wird andererseits die Stange 63 ausgezogen, drückt die Federplatte, an der die Mutter 65 anliegt, die Feder soweit zusammen, bis diese auf Blocklänge anliegt.

Eine zweckmäßige Ausführungsform eines solchen längenveränderlichen Lenkers 25, mit hydraulischer Federung, ist schematisch in Fig. 5 dargestellt. Im Mantel oder Gehäuse 50 des Zylinders sind durch eine mittlere Trennwand zwei Zylinderräume 51, 52 gebildet und mit Hydrauliköl gefüllt, die von einem Hydraulikspeicher aus mit einem wählbaren Druck vorgespannt sind. Wenn bei einem Querverschiebungsvorgang entsprechend Fig. 3 der Lenker 25 ausgezogen bzw. verlängert wird, verdrängt der mit dem Kolbenstangenende 54 verbundene Kolben Hydrauliköl aus dem Zylinderraum 52 in den Speicher 47, dessen Druck sich dabei erhöht. Entsprechend verhält sich der Lenker 25 beim Querverschwenken des Fahrzeugrahmens auf die zum Zustand gemäß Fig. 3 entgegengesetzte Seite, wenn er verkürzt wird. In diesem Fall verdrängt der mit dem Kolbenstangenende 53 verbundene Kolben bei seiner Bewegung in Richtung auf die mittlere Trennwand Hydrauliköl aus dem Zylinderraum 51.

Als Stellzylinder 26 kann ein handelsüblicher Hydraulikzylinder benutzt werden. Er wird durch Handsteuerung über eine nicht abgebildete Zeigermarkierung nach Beendigung des Abstützvoganges in die Grundstellung (entsprechend Mittelstellung des Zylinders) gebracht.

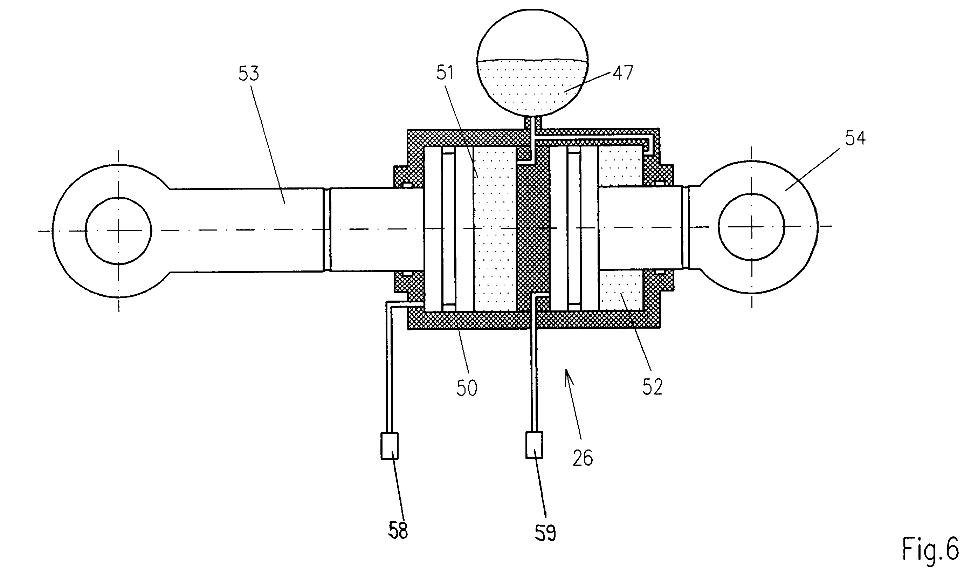

Um diesen Vorgang zu automatisieren, kann der Zylinder 26 auch nach Fig. 6 ausgebildet sein, wobei er im Prinzip dem hydraulischen Federlenker 25 der Fig. 5 entspricht. Soll der Zylinder verlängert werden, gibt man in den Anschluß 59 Hydrauliköl. Soll der Zylinder verkürzt werden, siehe Fig. 3, dann wird Hydrauliköl in den Anschluß 58 gegeben. Zur Erreichung der Grundstellung (siehe Fig. 2) werden beide Anschlüsse 58, 59 kurzzeitig mit dem Tank verbunden, d.h. drucklos gemacht, damit der Hydrospeicher 47 die Kolben in die in Fig. 6 gezeichnete Grundstellung bringen kann. Natürlich könnte der Hydrospeicher 47 sowohl beim Lenker Fig. 5, wie beim Stellzylinder Fig. 6 durch eine Druckleitung ersetzt werden. Beim Abkuppeln der Stützeinrichtung wäre dadurch ein weiterer Schlauchanschluß zu entkoppeln.

Wenn die drei Bolzen 27, 28, 29 gezogen werden und die Hydraulikverbindungen abgekuppelt sind, ist die gesamte Abstützeinrichtung frei, so daß der Teleskopstapler von der abgebauten stehenbleibenden Abstützeinrichtung entkoppelt wegfahren kann.

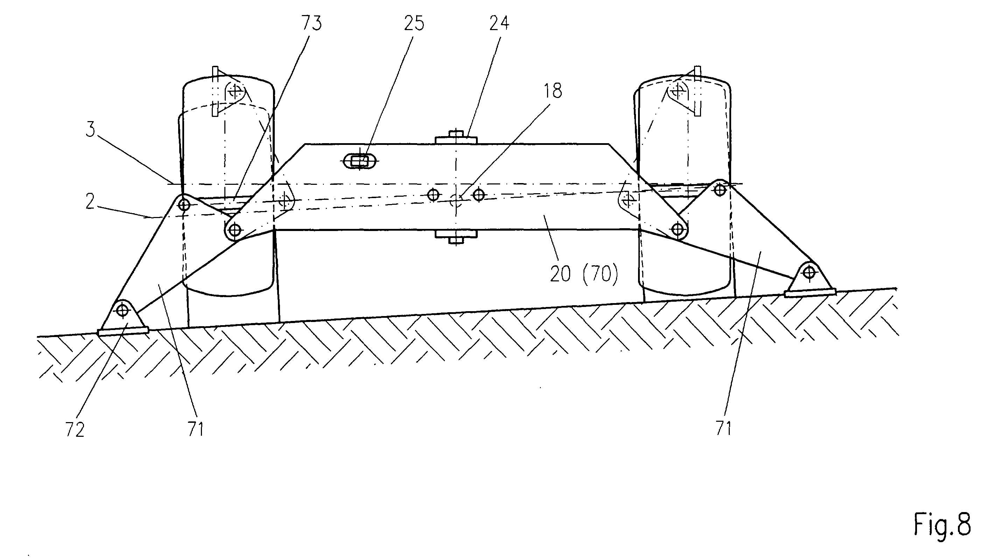

Bei einer gegenüber der in Fig. 1 bis 7 abgeänderten Bauform der erfindungsgemäßen Abstützeinrichtung ist der wie zuvor über den Verbindungslenker 24 und den Lenker 25 an den Fahrzeugrahmen angeschlossene Querträger 20 gemäß Fig. 8 mit seitlich abklappbaren Stützbeinen 71 versehen. Die Stützbeine sind an den Enden des Querträgers um in Fahrzeuglängsrichtung verlaufende Achsen schwenkbar gelagert und werden dabei von im gehäuseförmig ausgebildeten Querträger 70 gelagerte Hydraulikzylinder 73 betätigt. An die Enden der Stützbeine sind vorzugsweise mit Gummi belegte Bodenplatten 72 gelenkig angeschlossen, deren Bodenkontaktstellen je nach Abstützhöhe bzw. Geländehöhenunterschieden mehr oder weniger über das durch die Außenseiten der Fahrzeugräder bzw. das lichte Fahrzeugprofil überstehen, so daß eine größere Abstützbreite erreicht werden kann.

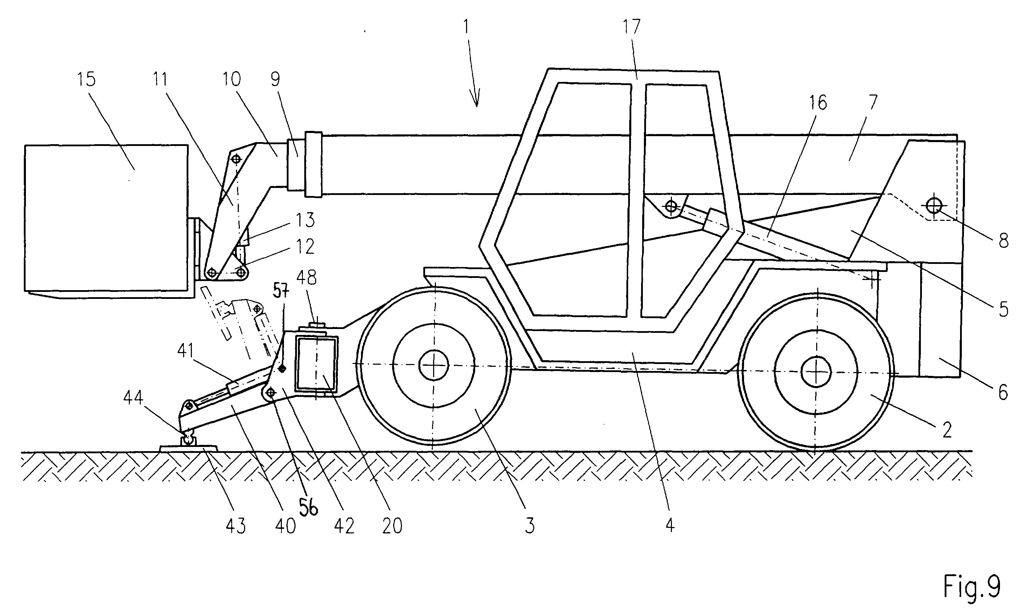

Entsprechend einer anderen Ausführungsform der erfindungsgemäßen Abstützeinrichtung gemäß Fig. 9 bis 11 ist der Querbalken 20 in seiner Quermitte mittels eines senkrechten Steckbolzens 48 direkt mittig vom am Fahrzeugrahmen 4 angeschlossen. Dies ist die einzige mechanische Verbindung zwischen Fahrzeugrahmen und Abstützeinrichtung, so daß letztere nach Ziehen des Steckbolzens 48 und Entkuppeln der Hydraulik abgebaut ist und auf einer beliebigen geeigneten, nicht gezeigten Unterstützung für den Querbalken 20 stehen bleiben bzw. abgestellt werden kann.

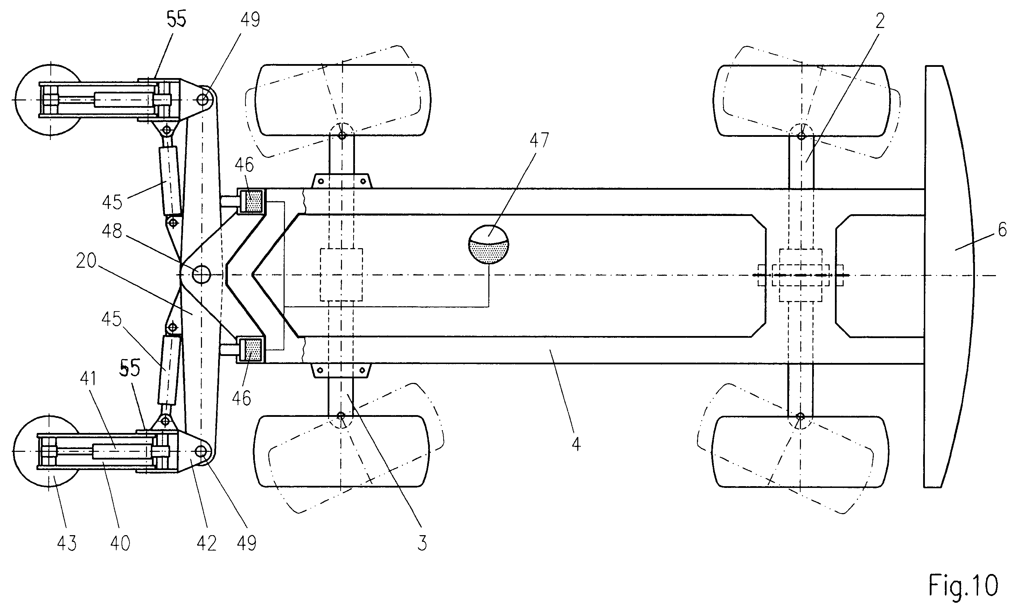

An den Enden des Querträgers 20 sind um senkrechte Achsen 49 zueinander parallel seitenschwenkbare Pratzenarme 40 angeschlossen, die jeweils mittels eines Pratzenzylinders entsprechend Fig. 9 aus einer angehobenen Ruhestellung längs nach vom bis zum Bodenkontakt und zum Anheben des Fahrzeuges abgeschwenkt werden können. An den vorderen Enden der Pratzenarme 40 sind abwärts gerichtete Kugelgelenkzapfen 44 als Lager für allseitig einstellbare Bodenplatten 43 befestigt. Die Pratzenarme 40 stehen an ihrem oberen Ende mit Schwenkkonsolen 42 in Verbindung, die an den endseitig am Querträger 20 angeordneten senkrechten Achsen 49 schwerkbar sind. Jede Schwenkkonsole ist über in senkrechten Seitenlaschen 55 gehaltene waagerechte Achsen 56, 57 mit einem Pratzenarm 50 und einem oberhalb des Pratzenarms verlaufenden Pratzenzylinder 41 gelenkig verbunden. Zur Seitenverschwenkung der Pratzenarme 40 sind gemäß Fig. 10 am Querträger 20 sowie an der jeweiligen Konsole 42 angelenkte Konsolenzylinder 45 vorgesehen.

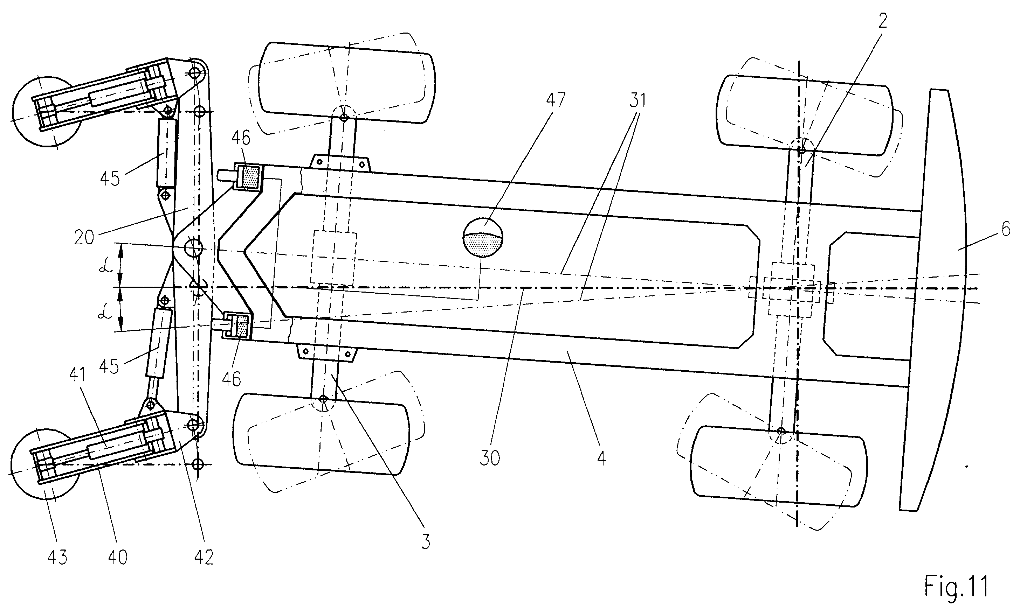

Zur Durchführung einer Seitenverschwenkung des Fahrzeugrahmens 4 in die in Fig. 11 gezeigte, um einen Winkel α von ca. 5° von der für die Ausgangsstellung geltenden Längsmittelachse 30 aus werden die gegenläufig angeordneten Konsolenzylinder 45, die über eine geeignete hydraulische Steuerschaltung angeschlossen sind, so beaufschlagt, daß der Querbalken 20 gegenüber seiner Grund- bzw. Ausgangsstellung eine Querverschiebung erfährt, die parallel zu einer gedachten Verbindungslinie zwischen den Bodenkontaktstellen der Bodenplatten 43 und der Pratzenarme 40 verläuft, die somit jeweils zwischen ihren Gelenkstellen 44 und 49 als Parallellenker wirksam sind.

Um den gemäß Fig. 11 seitwärts verstellten Querbalken 20 nach Beendigung des Abstützvorganges und nach Absenken des Fahrzeugrahmens auf seine Vorderräder in seine rechtwinklig zur Längsmittelachse 31 verlaufende Grundstellung automatisch zurückzubewegen, können vorn an beiden Seiten des Fahrzeugrahmens 4 federnde Anschläge 46 oder Federzylinder angeordnet sein. In der Grundstellung des Querbalkens 20 gemäß Fig. 10 liegen die mit gleicher Federkraft ausgestatteten Anschläge 46 unter geringer gleichmäßiger Vorspannung, wie gezeigt, am Querträger 20 an. Es ist grundsätzlich möglich, die federnden Anschläge durch einen längenveränderlichen Federzylinder zu ersetzen, der wie bei der Ausführungsform nach Fig. 4 und 5 ausgebildet sein kann.

## Patentansprüche

1. Abstützeinrichtung mit Querbewegungsantrieb für ein auf Rädern fahrbares Arbeitsgerät mit einem zweiachsigen Fahrzeugrahmen, insbesondere Teleskopstapler,
bestehend aus einem quermittig vom am Fahrzeugrahmen (4) gelenkig anschließbaren Querträger (20; 70), der höhenverstellbare Bodenplatten (23; 43) zum Anheben der Fahrzeugvorderachse aufweist, und aus einer zwischen Querträger und Fahrzeugrahmen wirksamen ersten Verbindungseinrichtung (24, 25; 48) sowie einer zwischen Querträger und Bodenplatten wirksamen zweiten Verbindungseinrichtung (21, 22; 40, 42), von denen die eine durch ein Paar seitlich nebeneinander angeordneter, um Vertikalachsen schwenkbarer Parallellenker gebildet ist, dem Schwenkbetätigungsmittel (26; 45) zugeordnet sind, um den Fahrzeugrahmen (4) bezüglich der aufstehenden Bodenplatten (23; 43) seitwärts zu bewegen.

2. Abstützeinrichtung nach Anspruch 1, dadurch gekennzeichnet, daß der Querträger (20) an beiden Enden senkrecht ausfahrbare Stützbeine (21, 22) aufweist und über zwei Lenker (24, 25) mit dem Fahrzeugrahmen (4) lösbar verbunden ist, wobei der eine Lenker (24) einen in der Längsmitte des Querträgers (20) und einem quermittig am Fahrzeugrahmen angeordneten Vertikalbolzen (32 bzw. 27) zum Lager hat und das ihm zugeordnete Schwenkbetätigungsmittel aus einem einerseits am Fahrzeugrahmen (4) und andererseits direkt oder indirekt am Querträger, zwischen den Enden dieses Lenkers (24) angreifenden Hydraulikzylinder (26) besteht.

3. Abstützeinrichtung nach Anspruch 1, dadurch gekennzeichnet, daß an den Enden des Querträgers (20) um in Fahrzeuglängsrichtung verlaufende Achsen schwenkbare Stützbeine (71) gelagert sind, die durch im gehäuseförmig ausgebildeten Querträger (70) gelagerte Hydraulikzylinder (73) betätigbar sind und an den Enden gelenkig angeschlossene Bodenplatten (72) aufweist.

4. Abstützeinrichtung nach Anspruch 2 oder 3, dadurch gekennzeichnet, daß der andere Fahrzeugrahmen und Querträger (20) verbindende eine Lenker (25) unter seitlichem Abstand vom mittigen Lenker (24) verläuft und derart längenveränderlich ist, daß er in der durch rechtwinkligen Verlauf des Querträgers (20) zur Fahrzeuglängsmittelachse bestimmten Grundstellung als Parallellenker wirkt und durch innere Federmittel in eine dem mittigen Lenker (24) entsprechende Länge vorgespannt ist.

5. Abstützeinrichtung nach Anspruch 2 bis 4, dadurch gekennzeichnet, daß der längenverändliche eine Lenker (25) zum Rückstellen des Querträgers (20) in seine Grundstellung nach Abschluß des Abstützvorganges innerhalb des einenends ein Anschlußauge tragenden Lenkergehäuses (60) eine vorgespannte Feder (61) hat, die die Lenkerlänge in ein vorbestimmtes Ausgangsmaß bringt.

6. Abstützeinrichtung nach einem der Ansprüche 2 bis 4, dadurch gekennzeichnet, daß der längenveränderliche eine Lenker (25) zum Rückstellen des Querträgers (20) in seine Grundstellung nach Abschluß des Abstützvorganges ein Zylindergehäuse (50) mit durch eine mittlere Trennwand gebildeten zwei Zylinderräumen (51, 52) aufweist, die jeweils einen mit einem Kolbenstangenende verbundenen Kolben (53, 54) enthalten, von denen der eine nur über seine volle Querschnittsseite und der andere nur über seine Differentialseite an einem gemeinsamen hydraulischen Speicher (47) angeschlossen ist.

7. Abstützeinrichtung nach einem der Ansprüche 2 bis 6, dadurch gekennzeichnet, daß der Schwenkbetätigungszylinder (26) zwei Zylinderräume (51, 52) aufweist und ein, insbesondere von einem Hydraulikspeicher erzeugter, Druck den Zylidner, nach Drucklosschalten seiner Steueranschlüsse (58, 59), in die Grundstellung zurückfährt.

8. Abstützeinrichtung nach Anspruch 1, dadurch gekennzeichnet, daß der mittels eines senkrechten Steckbolzens (48) an den Fahrzeugrahmen (4) anschließbare Querträger (20) durch an beiden Seiten des Fahrzeugrahmens befestigte federnde Anschläge (46) oder Federzylinder in eine zur Fahrzeuglängsmittelachse rechtwinklige Grundstellung nachgiebig ausgerichtet ist, und daß an den Enden des Querträgers (20) um senkrechte Achsen (49) zueinander parallel seitenschwenkbare Pratzenarme (40) angeschlossen sind, die zusätzlich längs nach vorn abschwenkbar sind und deren vordere Enden an abwärts gerichteten Kugelgelenkzapfen (44) allseitig einstellbare Bodenplanen (43) tragen, und so die Pratzenarme selbst jeweils zwischen Bodenplatte (43) und senkrechter Achse (49) verschwenkbare Parallellenker bilden.

9. Abstützeinrichtung nach den Ansprüchen 1 und 8, dadurch gekennzeichnet, daß auf den endseitig am Querträger (20) angeordneten senkrechten Achsen (49) Schwenkkonsolen (42) gelagert sind, die über in senkrechten Seitenlaschen gehaltene waagerechte Achsen (56, 57) mit den Pratzenarmen (40) und mit oberhalb der Pratzenarme verlaufenden Pratzenzylindern (41) gelenkig verbunden und zur Seitenverschwenkung der Pratzenarme (40) durch am Querträger abgestützte Konsolenzylinder (45) angetrieben sind.

10. Abstützeinrichtung nach einem der Ansprüche 2 bis 9, dadurch gekennzeichnet, daß die Rückstellfunktion des oder der hydraulischen Zylinder (26; 45) zum Rückstellen des Querträgers (20) in seine Grundstellung und der Konsolenzylinder (45) zum Rückstellen der Pratzenarme (40) in ihre zum Querträger normalerweise senkrechten Verlaufsebenen nach Erreichen der beabsichtigten seitlichen Fahrzeugverschwenkung mittels gesteuerter hydraulischer Schaltelemente unterbrochen/blockiert ist, bis die Bodenplatten (23, 43, 72) in beschädigungsfreie Höhe über den Boden angehoben sind.
